# DEMANDE DE BREVET EUROPEEN

(11) **EP 4 661 341 A1**
(43) Date de publication de la demande: **10.12.2025**
(21) Numéro de dépôt: 25177523.5
(22) Date de dépôt: 20.05.2025
(51) Int. Cl.: H04L 9/40, H04L 9/32, G06F 21/33

(54) **PROCÉDÉ D'AUTHENTIFICATION D'UN TERMINAL POUR TRAVAILLEUR ISOLÉ AUPRÈS D'UN SERVEUR DISTANT**

(30) Priorité: 06.06.2024 FR 2405949
(71) Demandeur: Neovigie, 31500 Toulouse (FR)
(72) Inventeur: HOT, Philippe, 31500 TOULOUSE (FR); GARCIA, Nicolas, 31500 TOULOUSE (FR); RAVACHE, François-Julien, 31500 TOULOUSE (FR); LEWIN FLEUR, Lionel, 31500 TOULOUSE (FR); LEWIN FLEUR, Alexandre, 31500 TOULOUSE (FR)
(74) Mandataire: Santarelli

(57) **Abrégé**

L'invention concerne un procédé de certification d'un terminal (1) pour travailleur isolé auprès d'un serveur distant (2), comportant les étapes suivantes :
- génération (31) d'un jeton unique, comportant une première clé numérique,
- transmission (32) du jeton unique,
- génération (33) d'une clé privée du terminal et d'une clé publique du terminal,
- transmission (35) d'un message comportant l'identifiant du terminal, la clé publique du terminal et un code d'authentification, le code d'authentification étant calculé en utilisant la première clé numérique et une donnée d'entrée formée par une partie au moins du message,
- vérification (36) de la validité du code d'authentification en utilisant la première clé numérique,
- génération (37) d'un certificat numérique comportant l'identifiant du terminal, la clé publique du terminal et une signature créée en utilisant une deuxième clé numérique.

## Description

### Domaine technique de l'invention

L'invention a pour objet un procédé pour authentifier un terminal auprès d'un serveur distant.

Elle concerne le domaine technique des terminaux destinés à des travailleurs isolés.

### Technique antérieure

De nombreuses activités professionnelles impliquent la réalisation d'activités par un travailleur ou une travailleuse sans la proximité d'un collègue à même d'identifier une éventuelle situation d'urgence et/ou de porter assistance. C'est le cas, par exemple, lors d'intervention dans des locaux vides de personnel ou lors d'intervention en dehors des heures de présence de personnel sur le site.

Dans le présent texte, le terme « travailleur isolé » est utilisé pour désigner une personne étant amenée à réaliser des activités professionnelles sans la présence d'au moins une personne à proximité d'elle.

Afin de garantir la sécurité d'un travailleur isolé il convient de disposer de moyens de surveillance et d'alerte adaptés aux spécificités du lieu et des activités du travailleur isolé. L'utilisation d'un système comportant un terminal porté par le travailleur isolé et connecté à un serveur distant est une approche communément adoptée pour répondre à ce besoin. Le terminal est en général équipé de capteur (accéléromètre, centrale inertielle) permettant la détection d'une situation dangereuse, une chute par exemple, ainsi que de moyens de vérification, un système de communication vocal par exemple. Le terminal peut notamment être un téléphone portable.

Dans le cadre de la configuration d'un terminal afin de préparer son utilisation comme dispositif d'alerte et/ou de suivi et/ou de surveillance pour un travailleur isolé il convient de configurer le terminal et un serveur distant pour permettre leur connexion. De plus, cette connexion doit pouvoir être réalisée de manière authentifiée et confidentielle. En effet, un autre dispositif ne doit pas pouvoir usurper l'identité du terminal auprès du serveur distant, ni usurper l'identité du serveur distant auprès du terminal et les informations échangées entre le terminal et le serveur distant ne doivent pas pouvoir être observées ou bloquées. Les informations échangées par le terminal et le serveur distant sont potentiellement privées ou à même de compromettre la sécurité de site et/ou de personnes, par exemple, lorsque le travailleur isolé est un agent de sécurité dont le terminal transmet la position au serveur distant. Pour répondre à ce besoin, une méthode commune consiste à utiliser un identifiant et un mot de passe qui seront reconnus par le serveur distant. Cependant, les mots de passe sont sujets à des oublis ou à des échanges, ce qui compromet la sécurité des connexions entre le terminal et le serveur distant. De plus, chaque connexion entre le terminal et le serveur distant nécessite l'utilisation d'un mot de passe créant une étape courte mais répétitive à exécuter chaque jour de travail d'un travailleur isolé.

### Présentation de l'invention

La présente invention remédie aux inconvénients précités en proposant un procédé de certification d'un terminal pour travailleur isolé auprès d'un serveur distant.

A cet effet, et selon un premier aspect, le procédé de certification d'un terminal pour travailleur isolé auprès d'un serveur distant comporte les étapes suivantes :
- génération, par le serveur distant, d'un jeton unique comportant une première clé numérique,
- transmission, par le serveur distant au terminal, du jeton unique,
- génération, par le terminal, d'une paire de clés numériques comportant une clé privée du terminal et une clé publique du terminal,
- transmission, par le terminal au serveur distant, d'un message comportant l'identifiant du terminal, la clé publique du terminal et un code d'authentification, le code d'authentification étant calculé en utilisant la première clé numérique et une donnée d'entrée formée par une partie au moins du message,
- vérification, par le serveur distant, de la validité du code d'authentification en utilisant la première clé numérique,
- si le code d'authentification est valide, génération par le serveur distant d'un certificat numérique comportant l'identifiant du terminal, la clé publique du terminal et une signature créée en utilisant une deuxième clé numérique.

De telles étapes permettent au terminal pour travailleur isolé d'être certifié auprès du serveur distant. On entend par certifié, le fait que l'identité du terminal soit connue par le serveur distant et que cette identité ne pourra pas être usurpée par une autre entité. En effet, le certificat numérique associe l'identifiant du terminal à la clé publique du terminal de façon garantie par le serveur distant. Le serveur distant assure donc un rôle équivalent à celui d'une autorité de certification. Grâce à cette certification du terminal auprès du serveur distant, les futures communications entre le terminal et le serveur distant pourront être sécurisées de manière à assurer la confidentialité et l'intégrité d'une part des alertes levées par le terminal en cas de situations anormales du travailleur isolé, et d'une autre part des éventuelles communications vidéo ou vocales de levée de doute sur l'alerte. Cette levée de doute sur l'alerte permet de confirmer la nécessité d'une intervention d'une équipe de secours.

De manière supplémentaire, de telles étapes permettent de certifier le terminal auprès du serveur distant sans nécessiter l'utilisation par le travailleur isolé ou par une autre personne d'un mot de passe. Cela facilite la mise en place de la surveillance du travailleur isolé pour assurer sa sécurité.

On entend par jeton unique, par exemple, une donnée numérique ou un message numérique. Un jeton unique est communément nommé « token » en anglais.

On entend par code d'authentification d'un message, par exemple, un code d'authentification de message basé sur le hachage, aussi appelé « HMAC » en anglais, calculé à partir du message selon une fonction de hachage cryptographique, par exemple le « HMAC-SHA-256 », en utilisant une clé numérique.

On entend par vérification de la validité du code d'authentification par exemple, l'utilisation d'un procédé cryptographique comportant une nouvelle étape de génération d'un code d'authentification du message et une étape de comparaison entre le code d'authentification dont la validité est vérifiée et le code d'authentification nouvellement généré.

On considère un code d'authentification comme valide, lorsque le code d'authentification dont la validité est vérifié et le code d'authentification nouvellement généré sont identiques.

On entend par « paire de clés numériques comportant une clé privée et une clé publique » ; une paire de clés de chiffrement asymétrique. Seule la clé privée permet de déchiffrer une information chiffrée par la clé publique et seule la clé publique permet de déchiffrer une information chiffrée par la clé privée. En particulier, la paire de clés numériques pourra être, par exemple, une paire de clés générée selon l'algorithme de signature digitale « DSA ».

Dans des modes particuliers de mise en œuvre l'invention peut comporter en outre l'une ou plusieurs des caractéristiques suivantes, prises isolément ou selon toutes les combinaisons techniquement possibles.

Selon un mode de mise en œuvre, le jeton unique comporte également un identifiant de certification. Le message transmis par le terminal vers le serveur distant comporte également l'identifiant de certification et le procédé de certification comporte une étape supplémentaire de vérification par le serveur distant de la correspondance entre l'identifiant de certification dans le jeton unique et l'identifiant de certification dans le message.

On entend par « identifiant de certification », un identifiant unique à chaque réalisation d'un procédé de certification. L'utilisation de l'identifiant de certification permet notamment au serveur distant, dans le cas où plusieurs procédés de certification sont réalisés simultanément pour plusieurs terminaux par un même serveur distant, de connaitre quelle première clé numérique utiliser pour vérifier la validité du code d'authentification. De cette manière, un gain de temps est réalisé par le serveur distant lors de la réalisation de plusieurs procédés de certification simultanément.

On entend par « vérification de la correspondance entre l'identifiant de certification dans le jeton unique et l'identifiant de certification dans le message» par exemple, une comparaison entre les deux identifiants de certification.

Selon un mode de mise en œuvre, le procédé de certification comporte les étapes supplémentaires suivantes :
- transmission, par le serveur distant au terminal, du certificat numérique,
- mémorisation du certificat numérique par le terminal.

La transmission au terminal puis la mémorisation par le terminal du certificat numérique, permettent au serveur distant d'économiser du volume de stockage, aussi appelé espace mémoire. En effet, dans le cas où plusieurs terminaux pour travailleur isolé sont certifiés auprès d'un même serveur distant, chaque certificat numérique peut être conservé par le terminal correspondant plutôt que par le serveur distant.

Selon un deuxième aspect, l'invention concerne un procédé d'authentification d'un terminal pour travailleur isolé comportant les étapes suivantes :
- certification du terminal auprès du serveur distant selon le procédé de certification du premier aspect de l'invention,
- transmission, par le terminal au serveur distant, d'une demande d'authentification comportant l'identifiant du terminal,
- vérification, par le serveur distant, de la validité du certificat numérique comportant l'identifiant du terminal transmis dans la demande d'authentification,
- si le certificat est valide, transmission, par le serveur distant au terminal, d'un message, dit message aller, comportant un nombre aléatoire,
- après réception du message aller génération d'une signature du nombre aléatoire, par le terminal en utilisant la clé privée du terminal,
- transmission, par le terminal vers le serveur distant, d'un message, dit message retour, comportant la signature du nombre aléatoire,
- vérification de la validité de la signature du nombre aléatoire, par le serveur distant, en utilisant la clé publique du terminal,
- si la signature est valide, notification, par le serveur distant au terminal, du succès de l'authentification.

De telles étapes permettent à un terminal pour travailleur isolé d'être authentifié auprès d'un serveur distant. On entend par « authentifié », le fait que, au préalable d'un échange d'information entre le terminal et le serveur distant, la sécurité et l'authenticité des échanges soient assurées. De manière supplémentaire, de telles étapes permettent d'authentifier le terminal auprès du serveur distant sans nécessiter l'utilisation par le travailleur isolé ou par une autre personne d'un mot de passe. Cela facilite la mise en place de la surveillance du travailleur isolé pour assurer sa sécurité. L'étape de certification du terminal auprès du serveur distant pourra être avantageusement réalisée une seule fois pour un terminal puis les étapes suivantes pourront être réalisées au préalable de l'établissement de chaque communication sécurisée entre le terminal et le serveur distant. Par exemple, au début de chaque intervention du travailleur isolé, utilisateur du terminal.

On entend par vérification de la validité de la signature du nombre aléatoire, un procédé cryptographique, par exemple le « DSA », utilisant une donnée d'entrée formée par le nombre aléatoire, la clé publique du terminal et la signature destinée à vérifier que la signature a été générée à partir du nombre aléatoire en utilisant la clé privée du terminal.

On entend par « signature valide », une signature pour laquelle le résultat de la vérification de la validité est positif.

On entend par « nombre aléatoire », un nombre généré de façon aléatoire, communément appelé « rand » en anglais.

La vérification de la validité du certificat numérique par le serveur distant permet de garantir l'authenticité du terminal même si le certificat numérique n'a pas été conservé dans un stockage sécurisé entre la réalisation du procédé de certification et la réalisation du procédé d'authentification. En effet, l'identité du terminal pourrait être usurpée si le lien entre son identifiant et sa clé publique, établi lors du procédé de certification, était modifié par une autre entité, ce qui est possible si le certificat est conservé dans un stockage non sécurisé. Cependant, lors d'une telle modification le certificat numérique perd sa validité.

On entend par vérification de la validité du certificat numérique par le serveur distant par exemple, une vérification réalisée selon un procédé cryptographique utilisant une donnée d'entrée comportant le certificat numérique, la signature du certificat numérique et une clé numérique destiné à vérifier que la signature a été générée à partir du certificat en utilisant la clé numérique ou une clé privée correspondant à la clé numérique lorsque la clé numérique est une clé publique générée selon un algorithme comme, par exemple, le « DSA ».

Selon un mode de mise en œuvre, la demande d'authentification comporte le certificat numérique.

La transmission du certificat numérique, par le terminal au serveur distant, dans la demande d'authentification, implique que lors de la réalisation du procédé de certification du premier aspect de l'invention le certificat numérique a été transmis au terminal et mémorisé par le terminal. De telles étapes permettent au serveur distant d'économiser du volume de stockage, aussi appelé espace mémoire.

Selon un mode de mise en œuvre, le jeton unique est transmis sous la forme d'un code QR.

On entend par « code QR », aussi appelé « QR code » en anglais (« Quick Response Code ») un code-barres à deux dimensions, sous forme d'une image, affichée sur un écran ou imprimée sur papier et lisible par un dispositif électronique. L'action de lire un code QR à l'aide d'un dispositif électronique est communément appelé scanner.

Dans le cas où le terminal est, par exemple, un téléphone portable, le travailleur isolé ou un coordinateur de la mise en place de la sécurité du travailleur isolé pourra facilement contribuer au procédé de certification du terminal auprès du serveur distant en scannant, à l'aide du terminal, le code QR contenant le jeton unique émis par le serveur distant.

Selon un mode de mise en œuvre, le jeton unique est transmis au terminal par sms ou par email. Si le terminal est directement accessible par le serveur distant au préalable de la réalisation du procédé de certification, par exemple, lorsque le terminal est un téléphone portable et que son numéro est connu du serveur distant ou que l'adresse mail du détenteur du téléphone portable est connue. Dans ce cas, le jeton unique peut être transmis au terminal par sms ou par email ce qui facilite la réalisation du procédé de certification.

Selon un mode de mise en œuvre, le procédé selon le premier ou le deuxième aspect comporte une étape supplémentaire de révocation du certificat numérique par le serveur distant.

On entend par « révocation », le fait que le certificat ne soit plus considéré comme valide et que l'identifiant du terminal qu'il contient ne soit plus considéré comme correspondant à celui d'un terminal certifié. Cela permet, d'annuler la certification d'un terminal qui, par exemple, aurait été perdu ou qui ne serait plus utilisé par un travailleur isolé, et d'éviter que ce terminal puisse toujours se connecter au serveur distant.

Selon un mode de mise en œuvre, le procédé selon le premier ou le deuxième aspect comporte une étape supplémentaire d'association, par le serveur distant, d'un profil de travailleur isolé à l'identifiant du terminal.

On entend par « profil de travailleur isolé », un ensemble d'informations pertinentes pour la sécurité du travailleur isolé et variables en fonction du travailleur isolé. Il s'agit par exemple, du type de surveillance à réaliser (détection de chute, chronomètre de durée d'occupation d'une zone à risque, etc.) ou du type de procédure de secours (appel d'un collègue, appel des pompiers, etc.). Cela permet de mettre en place une sécurité adaptée aux spécificités d'un travailleur isolé.

Selon un mode de mise en œuvre, le procédé selon le premier ou le deuxième aspect comporte une étape supplémentaire de configuration, par le serveur distant, du profil de travailleur isolé de manière à y ajouter les caractéristiques suivantes :
- un profil de surveillance,
- une procédure de levée de doute,
- une procédure de secours.

On entend par profil de surveillance, la ou les surveillances du travailleur isolé à réaliser, par exemple, la détection de chute ou la détection d'entrée dans une zone dangereuse.

On entend par procédure de levée de doute, une procédure qui permet de confirmer une alerte avant de déclencher une procédure de secours. L'alerte peut être confirmée, par exemple, si le travailleur isolé n'appuie pas sur un bouton du terminal dans un certain délai ou à la suite d'une communication vidéo avec un opérateur réalisée grâce au terminal.

On entend par procédure de secours, une procédure qui permet de porter secours au travailleur isolé. Par exemple, un appel à un service de sécurité indiquant la localisation du travailleur isolé en détresse ou un appel à un collègue du travailleur isolé en détresse.

Cette étape permet de mettre en place une sécurité adaptée aux spécificités d'un travailleur isolé et/ou de son lieu d'intervention et/ou de la nature de la situation de détresse détectée.

Selon un troisième aspect, l'invention concerne un terminal comportant les éléments suivants :
- un module de communication,
- une unité de traitement,
- une mémoire électronique comportant un programme d'ordinateur comprenant des instructions qui, lorsque le programme est exécuté par l'unité de traitement, conduisent celle-ci à mettre en œuvre les étapes du procédé, réalisées par le terminal, selon le premier aspect ou le deuxième aspect de l'invention.

De telles dispositions permettent audit terminal d'assurer, en combinaison avec un serveur distant, la sécurité d'un travailleur isolé sans que les communications réalisées dans le cadre de cette sécurité ne soient compromises par un tiers et sans nécessiter l'utilisation d'un mot de passe.

On entend par terminal, un dispositif électronique conçu spécifiquement pour assurer la sécurité d'un travailleur isolé ou conçu initialement pour une autre application, par exemple, un téléphone portable.

Selon un quatrième aspect, l'invention concerne un serveur comportant les éléments suivants :
- un module de communication,
- une unité de traitement,
- une mémoire électronique comportant un programme d'ordinateur comprenant des instructions qui, lorsque le programme est exécuté par l'unité de traitement, conduisent celle-ci à mettre en œuvre les étapes du procédé, réalisée par le serveur distant, selon le premier aspect ou le deuxième aspect de l'invention.

De telles dispositions permettent audit serveur d'assurer, en combinaison avec un terminal, la sécurité d'un travailleur isolé sans que les communications réalisées dans le cadre de cette sécurité ne soient compromises par un tiers et sans nécessiter l'utilisation de mot de passe.

### Présentation des figures

L'invention sera mieux comprise à la lecture de la description suivante, donnée à titre d'exemple nullement limitatif, et faite en se référant aux figures :
[Fig. 1] une représentation schématique d'un exemple de procédé de certification d'un terminal pour travailleur isolé selon un aspect de l'invention,
[Fig. 2] une représentation schématique d'un exemple de procédé d'authentification d'un terminal pour travailleur isolé selon un aspect de l'invention,
[Fig. 3] une représentation schématique d'un exemple de procédé d'authentification d'un terminal pour travailleur isolé selon un aspect de l'invention,
[Fig. 4] une représentation schématique d'un exemple de terminal pour travailleur isolé selon un aspect de l'invention,
[Fig. 5] une représentation schématique d'un exemple de serveur distant selon un aspect de l'invention.
Dans ces figures, des références identiques d'une figure à une autre désignent des éléments identiques ou analogues. Pour des raisons de clarté, les éléments représentés ne sont pas nécessairement à une même échelle, sauf mention contraire.

### Description détaillée de modes de mise en œuvre particuliers de l'invention

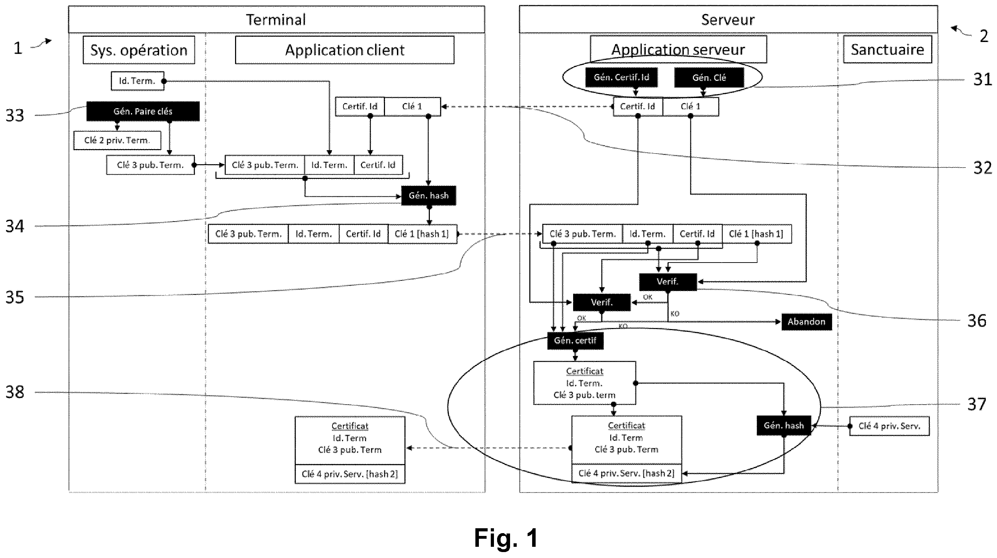

La figure 1 est une représentation schématique d'un exemple de procédé de certification d'un terminal pour travailleur isolé auprès d'un serveur distant. Un terminal 1 et un serveur 2 sont représentés. Le terminal 1 comporte une application ou programme informatique et un système d'opération. Le serveur 2, appelé serveur distant dans le présent texte, comporte également une application et un sanctuaire. On entend par « sanctuaire », un espace mémoire ou de stockage sécurisé, c'est-à-dire que l'intégrité et la confidentialité des informations contenues dans ce sanctuaire sont garanties. Le serveur réalise une étape de génération 31 d'un jeton unique ou « token ». Le jeton unique comporte une première clé numérique « Clé 1 » aussi appelée clé d'authentification. Selon un mode de réalisation le jeton unique peut également comporter un identifiant de certification « Certif. Id. ». La première clé numérique et l'identifiant de certification sont générés de manière à être unique. En effet, à chaque réalisation du procédé de certification une nouvelle première clé numérique et un nouvel identifiant de certification sont générés de manière à être différents de toutes les premières clés numériques et de tous les identifiants de certification générés précédemment. Le jeton numérique est ensuite transmis par le serveur distant au terminal.

Selon un mode de mise en œuvre, le jeton unique est transmis par le serveur distant au terminal à l'aide d'un QR code. En effet, un administrateur connecté directement à l'application du serveur 1 pourra imprimer ou afficher sur un écran le QR code et ensuite scanner ce QR code avec le terminal.

Selon un mode de mise en œuvre, le jeton unique est transmis, par le serveur au terminal, par mail ou par sms.

Selon un mode de mise en œuvre, le jeton unique est une suite de chiffre et de lettre indiquée oralement à un travailleur isolé ou à un opérateur, ou encore imprimée sur un papier et que le travailleur isolé ou l'opérateur entre manuellement sur le terminal à l'aide d'un clavier tactile dont serait équipé le terminal.

Le terminal 1 réalise une étape de génération 33 d'une paire de clés numériques comportant une clé privée du terminal « Clé 2 priv. Term. » et une clé publique du terminal « Clé 3 pub. Term. ». Seule la clé privée du terminal permet de déchiffrer un message chiffré par la clé publique du terminal et seule la clé publique du terminal permet de déchiffrer un message chiffré par la clé privée du terminal. Il s'agit d'une paire de clé de chiffrement asymétrique. Selon un mode de mise en œuvre, l'étape de génération d'une paire de clés numériques a déjà été réalisée par le terminal en amont du procédé de certification. Le terminal réalise ensuite une étape de création 34 d'un code d'authentification. Dans l'exemple considéré et décrit à la figure 1, le code d'authentification « Clé 1 [hash 1] » est créé en calculant un hash de la clé publique du terminal et/ou d'un identifiant du terminal en utilisant la première clé numérique. Selon un autre mode de mise en œuvre le hash est calculé à partir d'une partie de la clé publique du terminal et/ou d'une partie de l'identifiant du terminal. Ce hash est issue d'une fonction de hachage numérique utilisant une clé numérique, par exemple le « HMAC-SHA256 ».

Dans la présente demande, la nomenclature « Clé x [hash x] » indique le hash x généré par un procédé cryptographique en utilisant la clé x.

Le terminal 1 transmet ensuite un message comportant sa clé publique, son identifiant et le code d'authentification au serveur distant 2. Selon un mode de mise en œuvre, le terminal crée le code d'authentification en calculant un hash également à partir de tout ou partie de l'identifiant de certification puis transmet également l'identifiant de certification au serveur distant. Le serveur distant 2 vérifie ensuite que le code d'authentification est valide. Selon un mode de mise en œuvre, cette vérification 36 comporte une étape de calcul d'un nouveau code d'authentification à partir du message en utilisant la première clé numérique et une étape de vérification de la correspondance entre le code d'authentification nouvellement généré et le code d'authentification dont on vérifie la validité. Cette étape 36 de vérification permet de s'assurer que la clé publique et l'identifiant sont bien ceux du terminal qui a reçu la première clé numérique. En effet, une entité qui ne disposerai pas de la première clé numérique n'aurait pas pu générer un code d'authentification avec cette clé et n'aurait pas non plus pu substituer une autre clé publique et un autre identifiant à ceux envoyés par le terminal tout en maintenant la correspondance entre le message et le code d'authentification.

Si lors de cette vérification 36, le code d'authentification ne correspond pas au message, le procédé de certification s'interrompt ou est abandonné.

Selon un mode de mise en œuvre, lorsque les certifications de plusieurs terminaux sont réalisées simultanément, le serveur distant 1 utilise l'identifiant de certification pour identifier la première clé numérique appropriée pour vérifier la validité du code d'authentification.

Selon un mode de mise en œuvre, si l'identifiant de certification reçu par le serveur distant correspond à un identifiant de certification envoyé depuis plus longtemps qu'une durée prédéfinie, le procédé de certification est interrompu.

Si la correspondance entre le message et le code d'authentification est établie le serveur distant 2 réalise la génération 37 d'un certificat numérique. On entend par correspondance établie, le fait que le code d'authentification est bien celui du message (qu'il n'y a donc pas eu de substitution d'information dans le message) et qu'il a bien été généré en utilisant la première clé numérique. Le certificat numérique comporte l'identifiant du terminal, la clé publique du terminal et une signature crée grâce à une deuxième clé numérique.

Selon un mode de mise en œuvre, la deuxième clé numérique « Clé 4 priv. Serv. » est une clé privée du serveur distant 2.

Dans l'exemple considéré et décrit à la figure 1, le certificat numérique est transmis au terminal puis mémorisé par le terminal en prévision de la réalisation future d'un procédé d'authentification selon un autre aspect de l'invention. Cela permet de libérer de l'espace mémoire du serveur distant, qui pourra être utilisé pour mémoriser d'autres informations que les certificats numériques des terminaux certifiés.

Selon un mode de mise en œuvre, le certificat numérique n'est pas transmis au terminal et est mémorisé par le serveur distant. Cela permet de limiter la quantité d'information à envoyer par le terminal lors de la réalisation du procédé d'authentification.

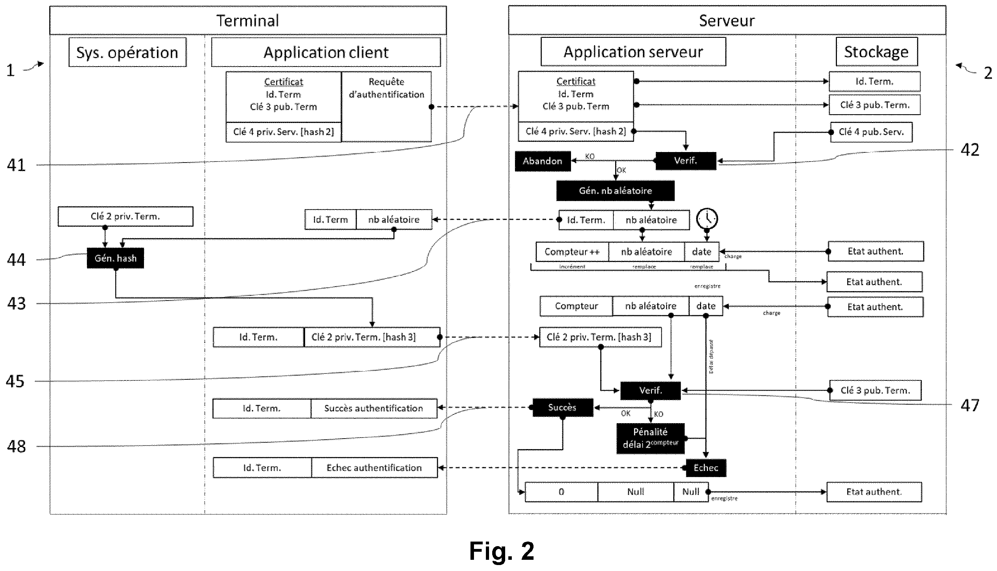

La figure 2 est une représentation schématique d'un exemple de procédé d'authentification d'un terminal 1 pour travailleur isolé auprès d'un serveur distant 2. L'étape de réalisation du procédé de certification d'un terminal pour travailleur isolé n'est pas représentée sur cette figure. Le terminal 1 envoi au serveur distant 2 son certificat numérique. Ensuite, le serveur distant réalise une vérification 42 de la validité du certificat numérique. Lors de cette vérification, le serveur distant vérifie la signature du certificat numérique à l'aide de la deuxième clé numérique. Dans l'exemple considéré et illustré sur les figures 1 et 2, la signature du certificat numérique est créée en utilisant une clé privée du serveur distant « Clé 4 priv. Serv. ». Dans ce cas, la signature est vérifiée en utilisant une clé publique du serveur distant « Clé 4 pub. Serv. », la clé publique et la clé privée du serveur distant formant une paire de clé de chiffrement asymétrique généré selon un algorithme comme, par exemple, l'algorithme de signature digitale « DSA » ou encore l'algorithme de signature digitale de courbe elliptique « ECDSA ». L'utilisation d'une paire de clé de chiffrement asymétrique par le serveur distant à la place d'une clé numérique de chiffrement symétrique permet au serveur distant de ne pas accéder au sanctuaire pour récupérer la deuxième clé numérique. En effet, une clé publique ne nécessite pas un espace mémoire sécurisé pour être conservée et l'accès à un espace mémoire sécurisée (sanctuaire) est plus long et couteux en temps de calcul du fait des vérifications d'identités lors de cet accès. La signature du certificat numérique « Clé 4 priv. Serv. [hash 2] » est vérifiée. Dans l'exemple considéré et illustré sur la figure 2, le serveur distant calcul un hash à partir de tout ou partie de la clé publique du terminal et de l'identifiant du terminal selon le même procédé que celui utilisé lors de la génération du certificat et ensuite vérifie la validité de la signature du certificat selon un algorithme comme par exemple, le « DSA », en utilisant le hash nouvellement généré et la clé publique du serveur distant « Clé 4 pub. Serv. ». Selon un mode de mise en œuvre, le terminal 1 transmets une demande d'authentification comportant l'identifiant du terminal et pas le certificat numérique. Dans ce cas, la validité du certificat numérique comportant l'identifiant du terminal est vérifiée.

Ensuite, le serveur distant 2 transmet un message aller comportant un nombre aléatoire. Après réception par le terminal, le terminal calcul une signature 44 du nombre aléatoire en utilisant sa clé privée. Puis, le terminal transmet au serveur distant un message retour comportant la signature du nombre aléatoire. Après réception du message retour par le serveur distant, le serveur distant 2 vérifie 47 la signature du nombre aléatoire en utilisant la clé publique du terminal.. Si la signature est valide le serveur distant notifie au terminal que son authentification est un succès. Le terminal 1 et le serveur distant 2 pourront ensuite échanger des informations dans le cadre de la surveillance du travailleur isolé de manière sécurisées et confidentielles par exemple grâce à l'utilisation des clés numériques précédemment échangées et/ou à l'aide d'un protocole de communication sécurisé comme le https.

Selon un mode de mise en œuvre, le procédé d'authentification est interrompu dans les cas suivants :
- le certificat numérique n'est pas valide,
- l'identifiant du terminal n'est pas valide,
- la signature du nombre aléatoire reçue dans le message retour ne correspond pas au nombre aléatoire envoyé dans le message aller,
- la signature du nombre aléatoire n'a pas été calculée en utilisant la clé privée du terminal,
- la durée entre l'envoi du message aller et la réception du message retour dépasse une durée prédéfinie.

Selon un mode de mise en œuvre, le procédé d'authentification s'interrompt après plusieurs tentatives d'envoi dans un message aller d'un nombre aléatoire. Par exemple, dans un cas de perturbation de la communication sur le réseau utilisé par le terminal et le serveur distant pour communiquer, la signature du nombre aléatoire dans le message retour a été corrompue et ne correspond plus au nombre aléatoire dans le message aller. Le serveur distant incrémente un compteur et le terminal renvoi le message retour. Si le compteur atteint un nombre maximal de tentatives prédéfini, le procédé d'authentification est interrompu.

La réalisation de l'exemple de procédé de certification représenté sur la figure 1 puis de l'exemple de procédé d'authentification représenté sur la figure 2 permet à un terminal pour travailleur isolé d'être authentifié auprès d'un serveur distant. Le terminal pour travailleur isolé et le serveur distant pourront ainsi échanger les informations à la fois nécessaires à la sécurité du travailleur isolé et adaptées aux spécificités de la ou des interventions/missions du travailleur isolé d'une manière sécurisée et confidentielle. De plus, l'atteinte de cet état de connexion sécurisée entre le terminal pour travailleur isolé et le serveur distant ne nécessite pas qu'un mot de passe soit utilisé par le travailleur isolé ou par un autre opérateur. L'utilisation de mot de passe présente souvent une faille de sécurité, un mot de passe pouvant être volé ou forcé. Avantageusement, le procédé de certification pourra être réalisé une fois pour un terminal et ce terminal pourra s'authentifier ensuite auprès du serveur distant de multiple fois, par exemple, au début de chaque intervention du travailleur isolé utilisateur du terminal.

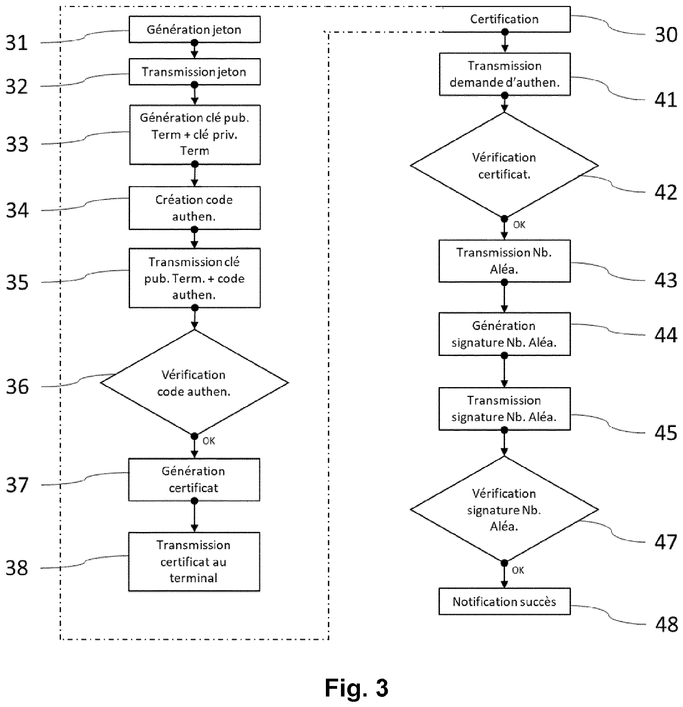

La figure 3 représente schématiquement un exemple de procédé d'authentification d'un terminal pour travailleur isolé selon un aspect de l'invention. Une étape de certification 30 est représentée. Cette étape comporte une sous étape de génération 31 d'un jeton unique par un serveur distant. Ce jeton unique comporte une première clé numérique. Le jeton unique est ensuite transmis 32 à un terminal pour travailleur isolé. Le terminal génère 33 une paire de clés numériques comportant une clé privée du terminal et une clé publique du terminal. Le terminal crée 34 un code d'authentification comportant un hash calculé à partir de tout ou partie de la clé publique du terminal en utilisant la première clé numérique. Le terminal transmet 35 sa clé publique et le code d'authentification. Ensuite, le serveur distant vérifie 36 la validité du code d'authentification. Si le code d'authentification est valide, le serveur distant génère 37 un certificat numérique comportant la clé publique du terminal et une signature créée grâce à une deuxième clé numérique. Selon un mode de mise en œuvre, le serveur distant transmet 38 le certificat numérique au terminal.

Une fois que le terminal est certifié auprès du serveur distant et au préalable de l'établissement d'une connexion sécurisée entre ledit terminal et le serveur distant, le terminal transmet 41 au serveur distant une demande d'authentification comportant le certificat numérique. Le serveur distant vérifie 42 la validité du certificat numérique. Si la validité du certificat numérique est établie, le serveur distant transmet 43 un message, dit message aller, comportant un nombre aléatoire au terminal. Ensuite, le terminal calcul 44 une signature du nombre aléatoire en utilisant sa clé privée et transmet 45 au serveur distant un message, dit message retour, comportant la signature du nombre aléatoire. Le serveur distant vérifie 47 la signature du nombre aléatoire en utilisant la clé publique du terminal. Si la signature est valide, le serveur distant notifie 48 au terminal le succès de l'authentification. Le serveur distant et le terminal pourront ensuite communiquer de manière sécurisée.

Selon un mode de mise en œuvre, le serveur distant révoque le certificat numérique. On entend par « révoque », le fait d'annuler la validité d'un certificat numérique. Le terminal dont l'identifiant et la clé publique sont contenus dans le certificat numérique ne pourra plus être authentifié auprès du serveur distant. Cette étape de révocation du certificat numérique est réalisée, lorsque le terminal correspondant est perdu ou n'est plus utilisé par le travailleur isolé pour sa surveillance et sa sécurité.

Selon un mode de mise en œuvre, le serveur distant associe à l'identifiant du terminal (contenu dans le certificat numérique), un profil de travailleur isolé. Le profil de travailleur isolé permet d'adapter la surveillance et les secours éventuellement déclenchés aux spécificités du travailleur isolé. Le profil de travailleur isolé contient par exemple, des informations sur le type de surveillances à réaliser (détection de chutes, chronomètre de présence dans une zone dangereuse,) des indicateurs éventuels de condition de début de surveillance (horaire de début et de fin de mission, entrée dans une zone d'intervention) des informations personnelles permettant d'accélérer une prise en charge médicale (groupe sanguin, allergies).

Selon un mode de mise en œuvre, le serveur distant configure le profil de travailleur isolé de manière à y ajouter les caractéristiques suivantes :
- un profil de surveillance comportant un ensemble d'informations permettant d'adapter la surveillance réalisée par le terminal du travailleur isolé. Par exemple, des conditions de début et de fin de surveillance (le travailleur isolé sort de la zone d'intervention), un type de surveillance (détection de chute grâce une centrale inertielle, détection de bruit dépassant un certain seuil, détection de certaine commande vocale comme un appel à l'aide de la part du travailleur isolé) ;
- une procédure de levée de doute comportant des informations permettant de configurer d'éventuelles procédures de confirmation d'alerte. En fonction du type d'alerte, il est ainsi possible d'ajouter une confirmation avant de déclencher une procédure de secours. Cette confirmation peut prendre la forme, par exemple, d'un appui sur un bouton du terminal avant un certain délai prédéfini ou d'une confirmation par un opérateur lors d'un appel vidéo ou vocal via le terminal ;
- une procédure de secours permettant d'adapter la manière de traiter une alerte aux besoins du travailleur isolé, du lieu d'intervention et du type d'alerte. Par exemple, la ou les personnes à prévenir en cas d'urgence (personnel de sécurité du site d'intervention, secours publique, collègues de travail).

La configuration du profil de travailleur isolé pour y ajouter de telles caractéristiques permet de réaliser la surveillance et/ou le suivi et/ou l'alerte d'une manière adaptée aux spécificités de chaque travailleur isolé et à chacune des missions réalisées.

Selon un mode mise en œuvre, une même configuration de profil de travailleur est appliquée à plusieurs terminaux de travailleur isolé différents, par exemple lorsque plusieurs travailleurs isolés interviennent sur le même site pour réaliser des missions présentant les mêmes risques.

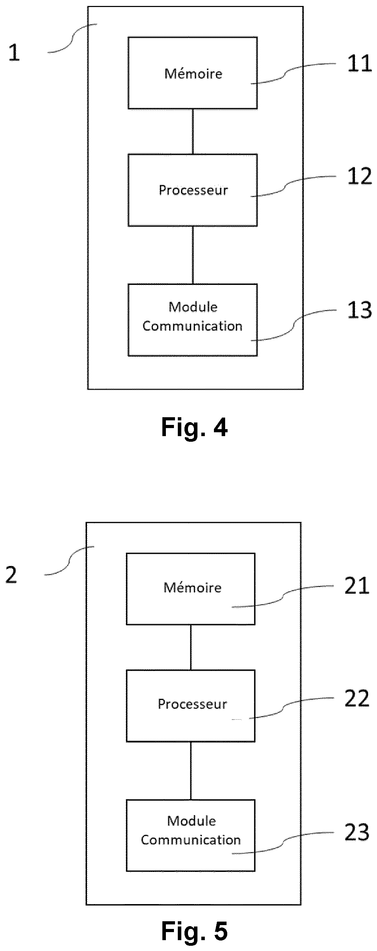

La figure 4 représente schématiquement un exemple de terminal pour travailleur isolé selon un aspect de l'invention. Le terminal 1 comporte un module de communication 13, un processeur 12 aussi appelé « unité de traitement » et une mémoire électronique 11. La mémoire électronique 11 comporte des instructions qui, lorsqu'elles sont exécutées par le processeur 12 conduisent ledit processeur à mettre en œuvre les étapes du procédé, réalisées par le terminal, selon l'un quelconque des modes de mise en œuvre précédemment décrits du procédé de certification d'un terminal pour travailleur isolé auprès d'un serveur distant.

De telles dispositions permettent au terminal 1 pour travailleur isolé d'échanger des informations relatives à la sécurité du travailleur isolé de manière confidentielle et sécurisée avec un serveur distant sans nécessiter l'utilisation d'un mot de passe par le travailleur isolé ou par un opérateur.

La figure 5 représente schématiquement un exemple de serveur distant selon un aspect de l'invention. Le serveur distant 2 comporte un module de communication 23. Ce module de communication 23 est configuré pour se connecter à un réseau de télécommunication permettant au serveur distant 2 et à un terminal pour travailleur isolé 1 de communiquer électroniquement à distance. Le serveur distant comporte également un processeur 22, aussi appelé « unité de traitement » et une mémoire électronique 21. Le processeur 22 est connecté au module de communication 23 et à la mémoire électronique. La mémoire électronique 21 comporte des instructions qui, lorsqu'elles sont exécutées par le processeur 22, conduisent ledit processeur à mettre en œuvre les étapes, réalisées par le serveur distant, selon l'un quelconque des modes de mise en œuvre précédemment décrits du procédé de certification d'un terminal pour travailleur isolé auprès du serveur distant.

De telles dispositions permettent au serveur distant 2 d'échanger des informations relatives à la sécurité d'un travailleur isolé de manière confidentielle et sécurisée avec un terminal, dont est équipé le travailleur isolé, sans nécessiter l'utilisation d'un mot de passe par le travailleur isolé ou par un opérateur.

## Revendications

1. Procédé de certification d'un terminal (1) pour travailleur isolé auprès d'un serveur distant (2), comportant les étapes suivantes :
- génération (31), par le serveur distant (2), d'un jeton unique comportant une première clé numérique,
- transmission (32), par le serveur distant (2) au terminal (1), du jeton unique,
- génération (33), par le terminal (1), d'une paire de clés numériques comportant une clé privée du terminal et une clé publique du terminal,
- transmission (35), par le terminal (1) au serveur distant (2), d'un message comportant l'identifiant du terminal, la clé publique du terminal et un code d'authentification, le code d'authentification étant calculé en utilisant la première clé numérique et une donnée d'entrée formée par une partie au moins du message,
- vérification (36), par le serveur distant (2), de la validité du code d'authentification en utilisant la première clé numérique,
- si le code d'authentification est valide, génération (37) par le serveur distant (2) d'un certificat numérique comportant l'identifiant du terminal, la clé publique du terminal et une signature créée en utilisant une deuxième clé numérique.

2. Procédé de certification selon la revendication 1, dans lequel le jeton unique comporte également un identifiant de certification, , dans lequel le message, transmis par le terminal (1) vers le serveur distant (2), comporte l'identifiant de certification et comportant une étape supplémentaire de vérification par le serveur distant (2) de la correspondance entre l'identifiant de certification dans le jeton unique et l'identifiant de certification dans le message.

3. Procédé de certification selon la revendication 1 ou 2, comportant les étapes supplémentaires suivantes :
- transmission (38), par le serveur distant (2) au terminal (1), du certificat numérique,
- mémorisation du certificat numérique par le terminal (1).

4. Procédé d'authentification d'un terminal (1) pour travailleur isolé auprès d'un serveur distant (2), ledit procédé comportant les étapes suivantes :
- certification (30) du terminal (1) auprès du serveur distant (2) selon le procédé de certification selon l'une quelconque des revendications 1 à 3,
- transmission (41), par le terminal (1) au serveur distant (2), d'une demande d'authentification comportant l'identifiant du terminal,
- vérification (42), par le serveur distant (2), de la validité du certificat numérique comportant l'identifiant du terminal transmis dans la demande d'authentification,
- si le certificat numérique est valide, transmission (43), par le serveur distant (2) au terminal (1), d'un message, dit message aller, comportant un nombre aléatoire,
- après réception du message aller, génération (44) d'une signature du nombre aléatoire, par le terminal (1), en utilisant la clé privée du terminal,
- transmission (45), du terminal (1) vers le serveur distant (2), d'un message, dit message retour, comportant la signature du nombre aléatoire,
- vérification (47) de la validité de la signature du nombre aléatoire, par le serveur distant (2), en utilisant la clé publique du terminal,
- si la signature est valide, notification (48), par le serveur distant (2) au terminal (1), du succès de l'authentification.

5. Procédé d'authentification selon la revendication 4, dont l'étape de certification (30) du terminal (1) auprès du serveur distant (2) est selon le procédé de certification de la revendication 3 et dont la demande d'authentification comporte le certificat numérique.

6. Procédé selon l'une quelconque des revendications précédentes dans lequel le jeton unique est transmis sous la forme d'un code QR.

7. Procédé selon l'une quelconque des revendications précédentes dans lequel le jeton unique est transmis par sms ou par email.

8. Procédé selon l'une quelconque des revendications précédentes comportant une étape supplémentaire de révocation du certificat numérique par le serveur distant (2).

9. Procédé selon l'une quelconque des revendications précédentes comportant une étape supplémentaire d'association, par le serveur distant (2), d'un profil de travailleur isolé à l'identifiant du terminal.

10. Procédé selon la revendication 9 comportant une étape supplémentaire de configuration, par le serveur distant (2), du profil de travailleur isolé de manière à y ajouter les caractéristiques suivantes :
- un profil de surveillance,
- une procédure de levée de doute,
- une procédure de secours.

11. Terminal (1) comportant les éléments suivants :
- un module de communication (13),
- une unité de traitement (12),
- une mémoire électronique (11) comportant un programme d'ordinateur comprenant des instructions qui, lorsque le programme est exécuté par l'unité de traitement (12), conduisent celle-ci à mettre en œuvre les étapes du procédé, réalisées par le terminal, selon l'une quelconque des revendications précédentes.

12. Serveur (2) comportant les éléments suivants :
- un module de communication (23),
- une unité de traitement (22),
- une mémoire électronique (21) comportant un programme d'ordinateur comprenant des instructions qui, lorsque le programme est exécuté par l'unité de traitement (22), conduisent celle-ci à mettre en œuvre les étapes du procédé, réalisée par le serveur distant, selon l'une quelconque des revendications 1 à 10.
